(19) Europäisches Patentamt
European Patent Office
Office européen des brevets

(11) EP 4 782 469 A1

(12) **EUROPEAN PATENT APPLICATION**
published in accordance with Art. 153(4) EPC

(43) Date of publication:
29.07.2026 Bulletin 2026/31

(21) Application number: 23952908.4

(22) Date of filing: 06.12.2023

(51) International Patent Classification (IPC):
*C08F 110/06* $^{(2006.01)}$

(52) Cooperative Patent Classification (CPC):
C08F 2/38; C08F 4/6592; C08F 110/06;
C08F 210/06; C08F 210/16; Y02P 20/52

(86) International application number:
PCT/CN2023/136814

(87) International publication number:
WO 2025/060264 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.09.2023 CN 202311232447

(71) Applicants:
• China Energy Investment Corporation Limited
Beijing 100011 (CN)
• National Institute of Clean-and-Low-Carbon
Energy
Beijing 102211 (CN)

(72) Inventors:
• YU, Peiqian
Beijing 102211 (CN)

• FENG, Liuhai
Beijing 102211 (CN)
• ZHENG, Zhigang
Beijing 102211 (CN)
• YU, Yue
Beijing 102211 (CN)
• BIAN, Yufei
Beijing 102211 (CN)
• SHI, Mengxue
Beijing 102211 (CN)
• CHEN, Linfeng
Beijing 102211 (CN)

(74) Representative: Forresters IP LLP
Skygarden
Erika-Mann-Straße 11
80636 München (DE)

(54) **CATALYST FOR OLEFIN POLYMERIZATION PROCESS, AND PROPYLENE POLYMER AND PRODUCTION METHOD THEREFOR**

(57) The present invention belongs to the technical field of propylene polymerization, and in particular relates to a catalyst for olefin polymerization, and a propylene polymer containing an ultra-high molecular weight polypropylene component and having an adjustable isotacticity and a production method therefor. The method comprises: in the presence of hydrogen and a polymerization catalyst, reacting propylene or reacting propylene with one or more optional comonomers; and in the presence of a mixture $D_H$ of a hydrogenation catalyst and an external electron donor, continuing to polymerize at least part of the resulting material stream, which contains a polypropylene component I, in a pipeline located outside a reactor or in a subsequent reactor connected thereto in series for 0.05-3.0 hours, thereby obtaining a propylene polymer product containing 0.03-15.0wt% of an ultra-high molecular weight polypropylene component, wherein a molar ratio of the hydrogenation catalyst to the total amount of hydrogen is 1/10000 to 1/100. In the present invention, a polypropylene product containing a relatively low content of an ultra-high molecular weight component is prepared, and the isotacticity of the ultra-high molecular weight polypropylene component can be flexibly adjusted.

EP 4 782 469 A1

**Description**

TECHNICAL FIELD

The present invention belongs to the technical field of propylene polymerization, and in particular relates to a catalyst for olefin polymerization, and a propylene polymer containing an ultra-high molecular weight polypropylene component and having an adjustable isotacticity and a production method therefor.

BACKGROUND

Generally speaking, a molecular chain structure of homopolymer polypropylene is linear and semi-crystalline, and common polypropylene exhibits a relatively low molecular weight (about several hundred thousand), and a softening point that is close to a melting point. After the melting point is exceeded, the melt strength drops rapidly, which leads to problems such as an uneven wall thickness of a container during thermoforming, edge curling and shrinkage during extrusion coating and calendering, cell collapse during extrusion foaming, and the like. In this way, it is difficult to produce large-sized products and achieve high-speed molding, which limits the application of polypropylene.

The properties of polypropylene are directly related to its overall molecular weight, molecular weight distribution width, molecular chain stereoregularity, and type, content and distribution of comonomers, and further, are also closely related to isotacticity distribution and comonomer distribution of high molecular weight components and low molecular weight components. Research indicates that increasing the overall molecular weight of polypropylene results in enhanced stiffness, toughness, and melt strength. . Adding a small amount of high molecular weight polypropylene components to the common polypropylene can broaden the molecular weight distribution of polypropylene products and improve a crystallization speed and processability. However, if a proportion of a high molecular weight polypropylene component is too high, the processability of the material will decrease rapidly.

In polypropylene, the distribution of high isotacticity of low molecular weight components and low isotacticity of high molecular weight components is very beneficial to biaxial stretching of polypropylene film materials.

A patent document US 6875826B1 of BOREALIS Company discloses a method for producing propylene homopolymer or copolymer, in which asymmetric hydrogenation is carried out in two reactors, that is, a Ziegler-Natta catalyst or a metallocene catalyst and an external electron donor (dicyclopentadienyl dimethoxysilane or cyclohexylmethyl dimethoxysilane) are selected in a loop-gas phase polymerization reactor connected in series, and widely distributed polypropylene with different molecular weight components containing the high molecular weight components, the low molecular weight components and the like is prepared by changing the amount of hydrogen in different reactors. The inventors have realized that although it is possible to produce the components with different molecular weights in different reactors by changing the amount of hydrogen in different reactors under a condition of using hydrogen, because hydrogen cannot be removed between the different reactors, the high molecular weight components with a melt mass flow rate or a melt index (MFR) less than 0.1 g/10min are produced by a method without adding hydrogen in the first reactor, and medium and low molecular weight components with MFR greater than 0.5 g/10min are produced by adding proper amount of hydrogen in the second reactor, so as to realize the characteristic that the obtained polypropylene has high melt strength. Although it is suggested in this patent that a load ratio of the two reactors is 5:95-95:5, the proportion of the high molecular weight components in embodiments is not less than 20% due to the difficulties in practical operation.

Patent documents CN102134291A, CN102816269A and CN105623077A all disclose that a widely distributed propylene homopolymer or propylene-ethylene copolymer with high melt strength is obtained by direct polymerization in reactors by using double reactors in series, using a traditional Ziegler-Natta catalyst, asymmetric addition of external electron donors and asymmetric hydrogen regulation technology; that is, firstly, an external electron donor of dicyclopentyl dimethoxysilane (D-donor) insensitive to hydrogen regulation is added into the first reactor to prepare propylene homopolymer or copolymer with high molecular weight and high isotacticity under the condition of no hydrogen or less hydrogen; then, an external electron donor of tetraethoxysilane (TEOS) sensitive to hydrogen regulation is added into the second reactor to prepare propylene homopolymer or copolymer with low molecular weight at a high hydrogen concentration, and finally propylene homopolymer, random copolymer or impact copolymer products with a melt index of 2.0-3.0 g/10min and a melt strength of 0.8-2.0 N are obtained; wherein a load ratio of the two reactors is 30:70-70:30.

In the method disclosed above, no matter asymmetric hydrogenation or adding an external electron donor, a large amount of hydrogen (sometimes as high as 20000 ppm) needs to be added in the second reactor to adjust the molecular weight of the product, and once the hydrogen returns to the first reactor with a circulating gas, the first reactor cannot produce polyolefin with a high molecular weight. Therefore, it is necessary to separate or remove hydrogen by traditional separation methods such as venting or pressure swing adsorption, which will lead to the loss of a large number of unreacted monomers, prolong a product brand switching time, produce a large number of transition materials and increase production costs. The high molecular weight components produced by the first polymerization reactor have a high composition content and a small adjustable range due to the limitation of a continuous operation load of the reactor, which will lead to a narrow adjustment range of melt index of the final product and poor processability; in addition, D-donor is used in the first polymerization reactor to generate high molecular weight components, which makes the isotacticity of high molecular weight components very high and difficult to adjust flexibly. At the same time, due to the extra introduction of a large number of external electron donors and hydrogen in the second reactor to produce low molecular weight components, the polymerization activity will be significantly reduced, the production control difficulty will increase, and an ash content of the final product will increase.

Patent documents US10934372B2 and US10544237B2 both propose a method suitable for two or more slurry phase polymerization reactors to produce bimodal polyolefin, in which hydrogen is normally added into the first reactor to produce low molecular weight polyolefin components, and all or part of hydrogen is removed from all or part of streams discharged from the first reactor by contacting with a hydrogenation catalyst to form streams with low hydrogen concentration, which enter the second reactor or return to the first reactor for polymerization to generate high molecular weight polyolefin components, and thereby producing homopolymers or copolymers of polyolefin with a molecular weight bimodal distribution. Therefore, a flash separation unit is omitted, that is, there is no step of emptying a material stream discharged from the first reactor to remove hydrogen. In this method, the hydrogenation catalyst is added to the stream discharged from an outlet of the first reactor. After the material containing the hydrogenation catalyst enters the second reactor or return to the first reactor, the reaction activity will be obviously reduced, which will affect the quality index control of polypropylene products such as a melt index and isotacticity, and then affect the normal operation of a device.

For a double-reactor system, when hydrogenation catalyst is used for the materials obtained from the first polymerization reactor before the materials entering the second reactor, it is difficult to adjust the load of the two reactors, the proportion of the high molecular weight components is too high, and the isotacticity of the high molecular weight components cannot be adjusted.

In addition, the above-mentioned methods for producing polypropylene products containing high molecular weight polyolefin components, whether using the hydrogenation catalyst to remove hydrogen, or asymmetric hydrogen regulation or asymmetric regulation of external electron donors, will also have similar problems, that is, if an external electron donor is used fixedly, the amount of hydrogen used is too large through asymmetric hydrogenation in two reactors, a molecular weight adjustment range of the polypropylene products is limited, the reactor is difficult to operate, the operation risk is high, the molecular weight distribution of the obtained polypropylene is not wide enough, the isotacticity of the high molecular weight components cannot be regulated, and their processability is poor. If different kinds of external electron donors are added into the two reactors respectively, and asymmetric hydrogenation is carried out at the same time, there are some problems, such as large amount of external electron donors, difficult load adjustment of the two reactors, high proportion of high molecular weight components which is greater than or equal to 30wt%, poor processability of products, and high ash content in products, and the like.

It can be seen that the above methods have a common defect, that is, the content of high molecular weight components in the produced propylene polymer products is relatively high, generally equals to or more than 15%. Too high content of the high molecular weight components will affect the processability of materials; at the same time, the isotacticity of the high molecular weight components is also difficult to adjust.

In view of this, controllable isotacticity of the high molecular weight components in the propylene polymer is beneficial to the improvement of product properties. How to control the proportion of the high molecular weight components and flexibly adjust the isotacticity of the high molecular weight components in the polymerization process is a research-worthy direction.

SUMMARY

Aiming at the problems existing in the preparation of polypropylene in the prior art, the present invention aims to provide a catalyst for olefin polymerization, a propylene polymer containing an ultra-high molecular weight polypropylene component and having an adjustable isotacticity, and a production method therefor. A polypropylene product with a low content of ultra-high molecular weight components is prepared by setting up a pipeline and the like outside a reactor at an end of a polymerization reaction as an additional polymerization reaction site and adding a mixture of a hydrogenation catalyst and an external electron donor thereinto to continue the polymerization reaction, and the isotacticity of the ultra-high molecular weight polypropylene components can be flexibly adjusted, so that the properties of the polypropylene product (including melt strength, tensile strength, impact strength, and bending strength, and the like.) are significantly improved while maintaining good processability.

In order to achieve the above objectives, the present invention provides the following technical solution:
In a first aspect, a catalyst for an olefin polymerization process is provided, the catalyst is a mixture of a transition metal Group IVB metallocene compound, an alkyl aluminum compound and an external electron donor D1, and the transition metal Group IVB metallocene compound is at least mixed with a part of the alkyl aluminum compound before contacting with the external electron donor D1.

According to the catalyst provided by the present invention, in some embodiments, the catalyst is a mixture of a hydrogenation catalyst and the external electron donor D1, and the hydrogenation catalyst is a mixture of the transition metal Group IVB metallocene compound and the alkyl aluminum compound.

According to the catalyst provided by the present invention, in some embodiments, the external electron donor D1 is an alkoxy-substituted silane compound, for example, it can be selected from dicyclopentyl dimethoxysilane (D-donor), methylcyclohexyl dimethoxysilane, diisopropyl dimethoxysilane, diisobutyl dimethoxysilane, n-propyl trimethoxysilane, n-propyl triethoxysilane, tetraethoxysilane (TEOS), diethylamino triethoxysilane, preferably a dimethoxysilane compound.

In some embodiments, a general formula of the transition metal Group IVB metallocene compound is R(R')-M-X(X'), wherein

R and R' are each independently cyclopentadienyl, indenyl or fluorenyl without a substituent or with a substituent, wherein the substituent is preferably selected from methyl, ethyl, propyl, butyl and cycloalkyl; R and R' can be bridged by a substituent containing C or Si;
M is a transition metal element, preferably one or more selected from Ti, Zr and Hf;
X and X' are each independently a halogen atom, alkyl or alkoxy; and
more preferably, the transition metal Group IVB metallocene compound is $Cp_2TiCl_2$.

According to the catalyst provided by the present invention, in some embodiments, a molar ratio of the alkyl aluminum compound to the external electron donor D1 in the catalyst is 0.1:1-50:1 (for example, 0.2:1, 0.5:1, 0.8:1, 1:1, 2:1, 5:1, 8:1, 10:1, 15:1, 20:1, 25:1, 35:1, 40:1 and 45:1), preferably 0.1:1-30:1; and a molar ratio of aluminum in the alkyl aluminum compound to the transition metal Group IVB metallocene compound is 5.5-100.0:1 (for example, 6:1, 7:1, 8:1, 9:1, 10:1, 25:1, 50:1, 80:1 and 90:1), preferably 5.5-10.0:1, and more preferably 5.5-8.0:1.

In a second aspect, a propylene polymer containing an ultra-high molecular weight polypropylene component and having an adjustable isotacticity is provided, a melt mass flow rate (MFR, tested at 230°C and under a load of 2.16 kg) of the propylene polymer is greater than or equal to 0.01 g/10min and less than or equal to 10000 g/10 min; for example, 0.05 g/10min, 0.1 g/10min, 0.2 g/10min, 0.5 g/10min, 1.0 g/10min, 2.0 g/10min, 5.0 g/10min, 10.0 g/10min, 20.0 g/10min, 50.0 g/10min, 100 g/10min, 200 g/10min, 500 g/10min, 1000 g/10min, 2000 g/10min, 5000 g/10min, 8000 g/10min;

the propylene polymer contains an ultra-high molecular weight component, a molecular weight MW of the ultra-high molecular weight component is greater than or equal to 10,000,000; in propylene polymer, a content of the ultra-high molecular weight component is 0.03-15.0wt% (for example, 0.035wt%, 0.04wt%, 0.05wt%, 0.06wt%, 0.08wt%, 0.1wt%, 0.2wt%, 0.4wt%, 0.5wt%, 0.8wt%, 1.0wt%, 5.0wt% and 10.0wt%); and
a ratio Mn (MW is greater than or equal to 10,000,000)/Mp of a number average molecular weight Mn of the ultra-high molecular weight component to a peak molecular weight Mp of the propylene polymer is greater than or equal to 80, for example, 85, 90, 100, 110, 120, 130, 140 and 150.

According to the propylene polymer provided by the present invention, in some embodiments, the content of the ultra-high molecular weight component in the propylene polymer is 0.03-5.0wt%.

In some embodiments, the ratio Mn (MW is greater than or equal to 10,000,000)/Mp of the number average molecular weight Mn of the ultra-high molecular weight component to the peak molecular weight Mp of the propylene polymer is greater than or equal to 100, and preferably Mn (MW is greater than or equal to 10,000,000)/Mp is greater than or equal to 120.

In some embodiments, the melt mass flow rate MFR of the propylene polymer is greater than or equal to 0.01 g/10min and less than or equal to 300 g/10min, preferably greater than or equal to 0.1 g/10min and less than or equal to 200 g/10min.

In some embodiments, the melt strength of the propylene polymer is greater than or equal to 2.0 cN, for example, 2.5 cN, 3.0 cN, 3.5 cN, 4.0 cN, 4.5 cN, 5.0 cN and 6.0 cN.

In a third aspect, a production method for the propylene polymer is provided and the method adopts two or more polymerization stages arranged in sequence, wherein the production method comprises the following steps:

(1) in a polymerization reactor, in the presence of hydrogen and a polymerization catalyst, reacting propylene or reacting propylene with optional one or more comonomers to perform a first-stage (co-) polymerization reaction for 0.1-10 hours (for example, 0.2 hours, 0.4 hours, 0.5 hours, 1.0 hour, 1.5 hours, 2.0 hours, 3.0 hour, 5 hours and 8 hours) to prepare a material stream containing a polypropylene component I;
(2) after the first-stage (co-) polymerization reaction, in the presence of a mixture $D_H$ of a hydrogenation catalyst and an external electron donor, continuing to polymerize at least part of the material stream containing the polypropylene component I, in a pipeline located outside a polymerization reactor in step (1) or in a second and subsequent reactors connected to the polymerization reactor in step (1) in series for 0.05-3.0 hours (for example, 0.06 hours, 0.08 hours, 0.1 hours, 0.2 hours, 0.4 hours, 0.5 hours, 0.8 hours, 1.0 hour, 1.5 hours, 2.0 hours and 2.5 hours), thereby obtaining an ultra-high molecular weight polypropylene (UHMWPP) component; and

stopping the reaction to obtain a propylene polymer product containing the ultra-high molecular weight polypropylene (UHMWPP) component;
wherein, a molar ratio of the hydrogenation catalyst to the total amount of hydrogen existing in the reactor is 1/10000 to 1/100 (for example, 1/8000, 1/5000, 1/4000, 1/2000, 1/1000, 1/800, 1/500, 1/400 and 1/200), preferably 1/10000 to 1/1000.

The material stream containing the polypropylene component I obtained in step (1) at least contains unreacted propylene, unreacted hydrogen, polypropylene component I, and possibly a small amount of hydrogen, and polymerization catalyst, and the like.

According to the production method provided by the present invention, in some embodiments, in step (1), the polymerization catalyst comprises: (a) an active solid catalyst component, preferably a solid catalyst active component containing titanium; (b) an organoaluminum compound as a cocatalyst component; and, optionally, (3) an external electron donor D2; the polymerization catalyst is preferably a mixture D formed by the active solid catalyst component, the organoaluminum compound and the external electron donor D2.

In some embodiments, a strength of a catalytic effect of the mixture $D_H$ is higher than a strength of a catalytic effect of the mixture D.

The external electron donor D1 in the mixture $D_H$ and the external electron donor D2 in the mixture D may be the same or different. According to the isotacticity requirements of the ultra-high molecular weight polypropylene components, different external electron donors or two or more different external electron donor compositions can be flexibly selected. When different external electron donors are used, the external electron donor D1 in the mixture $D_H$ is preferred to choose a compound with a stronger effect than the external electron donor D2 in the mixture D.

The "stronger effect" here means that under the same polymerization reaction condition, the isotacticity or molecular weight of the polymerization product obtained by using an external electron donor with a stronger effeect in a polymerization system is higher than that obtained by using an external electron donor with a relatively weak effect, for example, D-donor is stronger than C-donor and TEOS, and P-donor is stronger than B-donor.

In the present invention, the catalyst used for propylene (co-) polymerization includes, but is not limited to, a Ziegler-Natta catalyst, such catalyst generally includes: (a) an active solid catalyst component, preferably a solid catalyst active component containing titanium; (b) an organoaluminum compound as a cocatalyst component; and, optionally, (3) an external electron donor D2.

The active solid catalyst component can be the Ziegler-Natta catalyst or the molecular catalyst containing metallocene. Available active main catalyst components, such as commercially available SUG catalyst, SAL catalyst, or other catalysts containing both titanium chloride and magnesium chloride, and the like.

As the cocatalyst component in the catalyst, the organoaluminum compound is preferably selected from an alkyl aluminum compound, more preferably selected from trialkyl aluminum (such as triethyl aluminum, triisobutyl aluminum, tri-n-butyl aluminum), methylaluminoxane (MAO), modified methylaluminoxane (MMAO) and the like; wherein, the ratio of the active solid catalyst component to the organoaluminum compound is 1:5-1:400, preferably 1:25-1:200 based on the molar ratio of Ti/Al. The amount of the external electron donor component used in the polymerization catalyst can be a conventional choice in this field, and will not be described here.

In some embodiments, the external electron donor D1 and the external electron donor D2 are the same or different, and are each independently an alkoxy-substituted silane compound or a mixture of a plurality of alkoxy-substituted silane compounds.

The external electron donor D1 or D2 can be various electron-donating compounds, including alkoxy-substituted silane compounds with a general formula of $SiR_n(OR')_{4-n}$, wherein,

$$0 \leq n \leq 2,$$

R and R' are the same or different and are each independently alkyl, cycloalkyl, aryl, haloalkyl, and the like. R can also be halogen or a hydrogen atom.

In some embodiments, the external electron donor can specifically include, but is not limited to, tetramethoxysilane, tetraethoxysilane (TEOS), dimethyldimethoxy silane, dimethyldiethoxy silane, methyl tert-butyl dimethoxysilane, methyl isopropyl dimethoxysilane, diphenoxy dimethoxysilane, vinyl trimethoxysilane, methyl cyclohexyl dimethoxysilane, ethyl cyclohexyl dimethoxysilane, di-n-propyl dimethoxysilane, diisopropyl dimethoxysilane, di-n-butyl dimethoxysilane, di-isobutyl dimethoxysilane, di-tert-butyl dimethoxysilane, di-cyclopentyl dimethoxysilane (D-donor), cyclopentyl trimethoxysilane, isopropyl trimethoxysilane, n-propyl trimethoxysilane, n-propyl triethoxysilane, ethyl triethoxysilane, diethylamino triethoxysilane, cyclohexyl pyrrolidine dimethoxysilane, bis(pyrrolidino) dimethoxysilane, bis(perhydroisoquinolino) dimethoxysilane, 2-ethylpiperidinyl-2-tert-butyldimethoxysilane, (1,1,1-trifluoro-2-propyl)-2-ethylpiperidinyl dimethoxysilane and (1,1,1-trifluoro-2-propyl)-methyldimethoxysilane, and the like., preferably selected from di-cyclopentyl dimethoxysilane (D-donor), methyl cyclohexyl dimethoxysilane, diisopropyl dimethoxysilane, diisobutyl dimethoxysilane, n-propyl trimethoxysilane, n-propyl triethoxysilane, tetraethoxysilane (TEOS), and diethylamino triethoxysilane.

In some embodiments, the hydrogenation catalyst is a mixture of an organometallic compound and an alkylaluminum compound.

In some embodiments, a general formula of the organometallic compound is R(R')-M-X(X'), wherein:

R and R' are each independently cyclopentadienyl, indenyl or fluorenyl without a substituent or with a substituent, wherein the substituent is preferably selected from methyl, ethyl, propyl, butyl and cycloalkyl; R and R' can be bridged by a substituent containing C or Si;

M is a transition metal element, preferably one or more selected from Ti, Zr and Hf; and

X and X' are each independently a halogen atom, alkyl or an alkoxy.

In some embodiments, the organometallic compound can be specifically selected from one or more of di(cyclopentadienyl) titanium dichloride (titanocene), di(cyclopentadienyl) titanium dibromide, bis(cyclopentadienyl) methoxytitanium chloride, bis(cyclopentadienyl) ethoxytitanium chloride, bis(cyclopentadienyl) phenoxytitanium chloride, di(cyclopentadienyl) dimethyl titanium, di(cyclopentadienyl) diethyl titanium, di-indenyl titanium dichloride, di-indenyl titanium dibromide, di-indenyl dimethyl titanium, di-indenyl diethyl titanium, di(cyclopentadienyl) zirconium dichloride, di(cyclopentadienyl) zirconium dibromide, di(cyclopentadienyl) dimethyl zirconium and di(cyclopentadienyl) diethyl zirconium, preferably selected from di(cyclopentadienyl) titanium dichloride and/or di(cyclopentadienyl) diethyl titanium.

In some embodiments, the alkyl aluminum compound can be selected from one or more of trimethyl aluminum, triethyl aluminum, tributyl aluminum, triisobutyl aluminum, trihexyl aluminum, trioctyl aluminum, tridecyl aluminum, monochlorodimethyl aluminum, monochlorodiethyl aluminum, monochlorodibutyl aluminum, monochlorodiisobutyl aluminum, methylaluminoxane (MAO) and modified methylaluminoxane (MMAO), preferably selected from triethyl aluminum and/or methylaluminoxane.

In some embodiments, in the hydrogenation catalyst, the molar ratio of aluminum in the alkyl aluminum compound to the organometallic compound is 5.5-100.0:1 (for example, 6.0:1, 7.0:1, 8.0:1, 9.0:1, 10:1, 25:1, 50:1, 80:1 and 90:1), preferably 5.5-10.0:1, and more preferably 5.5-8.0:1.

In some embodiments, the hydrogenation catalyst is a mixture of $Cp_2TiCl_2$ and the alkyl aluminum compound; wherein a molar ratio of aluminum in the alkyl aluminum compound to $Cp_2TiCl_2$ is 5.5-100.0:1 (for example, 6.0:1, 7.0:1, 8.0:1, 9.0:1, 10:1, 25:1 and 50:1), preferably 5.5-10.0:1, and more preferably 5.5-8.0:1.

In some embodiments, in the mixture $D_H$ formed by the hydrogenation catalyst and the external electron donor D1, a molar ratio of the alkyl aluminum compound in the hydrogenation catalyst to the external electron donor D1 is 0.1:1-50:1 (for example, 0.2:1, 0.5:1, 0.8:1, 1:1, 2:1, 5:1, 8:1, 10:1, 15:1, 20:1, 25:1, 35:1, 40:1 and 45:1), preferably 0.1:1-30:1.

In the present invention, an outlet pipeline can be arranged at an end outside a single reactor or outside a plurality of series (parallel) reactors.

In the present invention, the mixture of the hydrogenation catalyst and the external electron donor can be added via either continuous addition or pulse addition.

In the present invention, there is no step of circulating the materials containing the hydrogenation catalyst to the polymerization reactor, which does not affect the normal operation and index control of the polymerization reactor; moreover, an additional location for the mixture of the hydrogenation catalyst and the external electron donor is flexible, and it can be at a powder outlet of the polymerization reactor, or at any place on the pipeline set in the process of conveying polypropylene powder to a bin, or at inlet front ends of the second or subsequent reactors connected in series with the first polymerization reactor.

In some embodiments, a length of the pipeline arranged outside the polymerization reactor in step (1) is 0.1-50 meters, for example, 0.5 meters, 1 meter, 2 meters, 5 meters, 10 meters, 20 meters and 40 meters.

The pipeline may include a pipeline as a polymerization reaction site outside a single reactor or a plurality of reactors in series for propylene polymerization and a connecting pipeline connected with a subsequent separation device. The material of the pipeline can be conventional in the field.

In some embodiments, a polymerization time in step (i) is 0.2-5 hours, preferably 0.3-3 hours.

In some embodiments, a polymerization temperature in step (i) is 40-250°C (for example, 50°C, 60°C, 70°C, 80°C, 100°C, 150°C and 220°C), preferably 50-200°C.

In some embodiments, a polymerization time in step (ii) is 0.08-2.0 hours, preferably 0.1-1.5 hours.

A polymerization temperature in step (ii) is 0-250°C (for example, 20°C, 50°C, 60°C, 70°C, 80°C, 100°C, 150°C and 220°C), preferably 20-200°C.

The polymerization temperature in step (ii) may be equal to or lower than the polymerization temperature in step (i).

According to the method provided by the present invention, in the polymerization reaction, a propylene monomer can be polymerized or a propylene monomer can be copolymerized with one or more comonomers. In some embodiments, the comonomer can be ethylene, 1-butene, 1-pentene, 1-hexene, 1-heptene, 1-nonene, 1-decene, and the like, or a mixture of any two or more comonomers, and the like.

According to the production method provided by the present invention, in some embodiments, the isotacticity of the prepared propylene polymer is changed (adjustable), and the difference in xylene solublecontent (XS%) of the prepared propylene polymer comapred to either polymers obtained without using the mixture $D_H$ formed by the hydrogenation catalyst and the external electron donor D1 or polymers obtained using only the hydrogenation catalyst falls within the range of difference of 0.02-5%, preferably 0.1-2%.

According to the production method of the present invention, in some embodiments, the melt mass flow rate MFR of the prepared propylene polymer is greater than or equal to 0.01 g/10min and less than or equal to 10000 g/10 min; for example, 0.05 g/10min, 0.1 g/10min, 0.2 g/10min, 0.5 g/10min, 1.0 g/10min, 2.0 g/10min, 5.0 g/10min, 10.0 g/10min, 20.0 g/10min, 50.0 g/10min, 100 g/10min, 200 g/10min, 500 g/10min, 1000 g/10min, 2000 g/10min, 5000 g/10min and 8000 g/10min.

According to the production method of the present invention, in some embodiments, the prepared propylene polymer contains ultra-high molecular weight components, and the molecular weight MW of the ultra-high molecular weight components is more than or equal to 10,000,000, for example, the molecular weight MW is greater than or equal to 10,000,000 and is less than or equal to 1,000,000,000; in the propylene polymer, the content of the ultra-high molecular weight component is 0.03-15.0wt% (for example, 0.035wt%, 0.04wt%, 0.05wt%, 0.06wt%, 0.08wt%, 0.1wt%, 0.2 wt %, 0.4wt%, 0.5wt%, 0.8wt%, 1.0wt%, 5.0wt% and 10.0wt%).

According to the production method of the present invention, in some embodiments, the ratio Mn (MW is greater than or equal to 10,000,000)/Mp of the number average molecular weight Mn of the prepared ultra-high molecular weight component to the peak molecular weight Mp of the propylene polymer is greater than or equal to 80, for example, 85, 90, 100, 110, 120, 130, 140 and 150.

The outlet materials of the propylene polymerization reactor contain polypropylene powder, catalyst, optional electron donor, propylene, comonomer, hydrogen, a small amount of propane, a small amount of nitrogen, and the like. Usually, such materials are still in the conditions of satisfying polymerization, the catalyst still has polymerization activity, and there is a certain concentration of polymerization monomer and hydrogen in the environment, so that the polymerization reaction can continue. According to the present invention, the material outlet pipeline arranged at the end outside the reactor is used as an additional polymerization reaction site, or the second and subsequent reactors connected in series with the first polymerization reactor or any place on the powder-to-bin conveying pipeline is used as an additional polymerization reaction site, so that the product material stream discharged from a single reactor or a reactor connected in series (in parallel) with the first polymerization stage can contact with the mixture of the hydrogenation catalyst and the external electron donor D1, and then enter a gas/solid separator through a connecting pipeline with a length of 0.1-50 meters. Subsequently, after catalyst deactivation and degassing treatment, the final product containing the ultra-high molecular weight components is obtained.

In the second polymerization stage, adding the hydrogenation catalyst and a certain amount of external electron donor D1 can effectively adjust an Al-Si ratio of the system, further adjust the isotacticity of the product and further improve the molecular weight of the product. In the mixture of the hydrogenation catalyst and the external electron donor, the hydrogenation catalyst is used for removing the hydrogen (chain transfer agent) remaining in the product material stream (powder) discharged from the reactor in the first polymerization stage, so that propylene can continue to polymerize to generate the ultra-high molecular weight polypropylene component (UHWMPP) under the condition of near hydrogen-free; the external electron donor is used for adjusting the isotacticity of the ultra-high molecular weight polypropylene component (UHWMPP) generated by the continuous reaction of propylene and further improve the molecular weight of the product. The present invention unexpectedly found that the introduction of the external electron donor D1 did not show any signs of changing the hydrogenation efficiency of the hydrogenation catalyst.

Compared with the prior art, the technical solution of the present invention has the beneficial effects that:

by adjusting the adding location of the mixture of the hydrogenation catalyst and the external electron donor, a residence time of the materials in additional polymerization reaction sites such as discharge pipelines can be flexibly adjusted, and a generation amount of the ultra-high molecular weight polypropylene components can be flexibly adjusted, so that the proportion of the ultra-high molecular weight components in the final polypropylene product can be regulated and controlled, and a negative influence on processability caused by too high content of high molecular weight components can be avoided; by adjusting the molar ratio of alkyl aluminum in the hydrogenation catalyst to the external electron donor, the ratio of aluminum to silicon in the system can be flexibly changed, and the isotacticity of the ultra-high molecular weight polypropylene components can be further flexibly adjusted; by adjusting the amount of the hydrogenation catalyst, the molecular weight of the ultra-high molecular weight polypropylene components can be adjusted to make its molecular weight MW reach 10,000,000 and above; therefore, a series of polypropylene products with ultra-high molecular weight and different compositions can be prepared;

controlling the amount of the hydrogenation catalyst and the amount of alkyl aluminum therein in a suitable range can reduce the influence of alkyl aluminum as the chain transfer agent on the molecular weight of the ultra-high molecular weight components and reduce the catalyst residue in the product; and

the test results of a high temperature gel permeation chromatography (GPC) show that the final product contains a certain amount of UHWMPP components, and the molecular weight distribution of the product is slightly broadened; the content of UHWMPP component is low, which can maintain good processing rheological properties and comprehensively improve the properties of the polypropylene products, such as melt strength, tensile strength, impact strength, and the like. The polypropylene products prepared by this method can meet the requirements of higher application scenarios and can be extended to the fields of extrusion foaming, coating, blow molding and thermoforming, and the like.

## DESCRIPTION OF EXEMPLARY EMBODIMENTS

In order to understand the technical features and contents of the present invention in detail, preferred embodiments of the present invention will be described in more detail below. Although the preferred embodiments of the present invention are described in the examples, it should be understood that the present invention can be realized in various forms and should not be limited by the embodiments set forth here. Where specific conditions are not specified in the examples, it shall be carried out according to the conventional conditions or conditions suggested by a manufacturer.

<Source of raw materials>

In each example and Comparative Example, a catalyst A was prepared according to Example 5 described in patent application CN101054424A, and a content of Ti in the catalyst was 3.0wt%; a catalyst B was prepared according to Example 3 described in patent application CN101054424A, and the content of Ti in the catalyst was 2.4wt%.

In each example and Comparative Example, preparation steps of the titanocene hydrogenation catalyst were as follows: under a nitrogen atmosphere, mixing titanocene dichloride and triethylaluminum (triethylaluminum supplied as a 1.0 mol/L of n-hexane solution) at a room temperature for at least 24 hours at different molar ratios (for example, 1:5.5-1:10) to prepare a plurality of mixed solutions, that was, the titanocene hydrogenation catalyst; then taking 1.0 ml of each mixed solution, and adding 33 ml of n-hexane to dilute for later use.

Preparation of an external electron donor solution: respectively taking different kinds of external electron donors and preparing 0.50 M of hexane solution for later use.

The hydrogenation catalyst and the external electron donor could be respectively injected into a polymerization reactor and mixed online, or could be mixed evenly in proportion before being injected into the polymerization reactor.

In each example and Comparative Example, the polymer was characterized by the following test methods:

(1) melt mass flow rate MFR: detected according to ASTM D1238;
(2) xylene soluble content XS: detected by an automatic xylene soluble analyzer (CRYSTEX QC) of Polymer Char Company;
(3) molecular weight and its distribution: detected by a high temperature gel permeation chromatograph (GPC-IR6) of Polymer Char Company;
(4) melt strength: detected by a RH7-2 capillary rheometer + balance of Malvern instruments Company;
(5) tensile strength: tested according to GB/T 1040.2-2006;
(6) bending strength: tested according to GB/T 9341-2008; and
(7) impact test: tested according to GB/T 1843-2008.

In each of the following Example and Comparative Example, a reaction environment, a material concentration and the like in the reactor after the reaction in step (i) were basically the same as the reaction environment, the material concentration and the like in a pipeline outside the reactor or in the second and subsequent polymerization reactors connected in series with the first polymerization reactor. Therefore, the experimental process used a single reactor and divided into two stages to simulate the polymerization reaction in industrial production by adding a hydrogenation catalyst and an external electron donor in the first polymerization reactor and the discharge pipeline outside the first polymerization reactor, or in the second and subsequent polymerization reactors connected in series with the first polymerization reactor: that was, the first stage polymerization reaction of the single reactor corresponded to the normal polymerization reaction of the first reactor in industrial production. The second-stage polymerization reaction of the single reactor corresponded to the polymerization reaction after adding the hydrogenation catalyst and the external electron donor into the discharge pipeline outside an industrial production device or the second and subsequent polymerization reactors connected in series with the first polymerization reactor; by using the mixture of the hydrogenation catalyst and the external electron donor in the second stage polymerization of the single reactor, the situation of introducing the mixture of the hydrogenation catalyst and the external electron donor in the discharge pipeline outside the industrial production device or in the second and subsequent polymerization reactors in series was simulated.

Example 1

Polymerization was carried out in a 5L stainless steel polymerizer:

(1) firstly, a reactor was purged with refined nitrogen (water was less than 1 ppm, oxygen was less than 1 ppm); then, 2.2 L of liquid propylene and 0.125 mol of hydrogen were sequentially added at a room temperature, and heated to 70°C;
before the temperature of the reactor reached 70°C, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 70°C, the mixture was injected into the reactor through a catalyst feed pipe and reaction timing was started; and the first stage polymerization reaction was carried out to prepare a material stream containing a polypropylene component I;
(2) after the reaction lasted for 60 minutes, a mixed solution of 25.5 ml (a concentration was $4.9 \times 10^{-6}$ mol/ml) of titanocene hydrogenation catalyst and 1.5 ml of 0.50 M external electron donor D-donor was re-added from the catalyst feed pipe (in the mixed solution, a molar ratio of alkyl aluminum contained in the hydrogenation catalyst to the external electron donor was 1:1; and the molar ratio of alkyl aluminum to titanocene in the hydrogenation catalyst was 6), the temperature was kept at 70°C to start timing the reaction, and it was simulated that the material stream containing polypropylene component I continued to react in the outlet pipeline outside the reactor or in the second and subsequent reactors connected in series with the polymerization reactor in step (1) for 5 minutes (that was, simulating the situation that the material stream containing the polypropylene component I was remained in the pipeline outside the polymerization reactor in step (1) or in the second and subsequent polymerization reactors connected in series with the polymerization reactor in step (1) for 5 minutes);
unreacted materials were vented, the temperature was decreased, and the reaction was stopped to obtain a propylene polymer product containing ultra-high molecular weight polypropylene (UHMWPP) components; and
(3) after the propylene polymer product was taken out, the product was dried in vacuum at 30°C for 2 hours, and then the dried polypropylene product was characterized. The test results are shown in Table 1.

Example 2

The production method for propylene polymer referred to Example 1. The difference was that the polymerization time in the presence of a mixed solution of the hydrogenation catalyst and the external electron donor D-donor in step (2) was changed to 30 minutes.
The dried polypropylene product was characterized. The test results are shown in Table 1.

Example 3

The production method for propylene polymer referred to Example 1. The difference was that the amount of the hydrogenation catalyst in step (2) was changed to 2.55 ml (that was, the amount was one ten-thousandth of the amount of hydrogen), and the amount of the external electron donor D-donor was changed to 0.15 ml (the molar ratio of alkyl aluminum in the hydrogenation catalyst to the external electron donor in the mixed solution was 1:1), and the polymerization time was still 5 minutes.
The dried polypropylene product was characterized. The test results are shown in Table 1.

Comparative Example 1

Polymerization was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and 0.12 mol of hydrogen were sequentially added at a room temperature, and heated to 70°C;
before the temperature of the reactor reached 70°C, 2.0 mL of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 70°C, the mixture was injected into the reactor through a catalyst feed pipe and the reaction timing was started;

(2) after the reaction lasted for 65 minutes, unreacted materials were vented, the reaction was cooled and stopped; and

(3) after the propylene polymer product was taken out, the product was dried in vacuum at 30°C for 2 hours, and then the dried polypropylene product was characterized. The test results are shown in Table 1.

Comparative Example 2

The production method for propylene polymer referred to Comparative Example 1, and the difference was that timing was carried out according to step (1) and step (2), after the reaction lasted for 90 minutes, unreacted materials were vented, the reaction was cooled and stopped; and

(3) after the propylene polymer product was taken out, it was dried in vacuum at 30°C for 2 hours, and then the dried polypropylene product was characterized. The test results are shown in Table 1.

Comparative Example 3

Polymerization was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and no hydrogen were added at a room temperature, and the obtained system was heated to 70°C;

before the temperature of the reactor reached 70°C, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 70°C, the mixture was injected into the reactor through a catalyst feed pipe and the reaction timing was started;

(2) after the reaction lasted for 60 minutes, unreacted materials were vented, the reaction was cooled and stopped; and

(3) after the propylene polymer product was taken out, the product was dried in vacuum at 30°C for 2 hours, and then the dried polypropylene product was characterized. The test results are shown in Table 1.

Example 4:

Polymerization was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and 0.125 mol of hydrogen were sequentially added at a room temperature, and the system was heated to 70°C;

before the temperature of the reactor reached 70°C, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 70°C, the mixture was injected into the reactor through a catalyst feed pipe and the reaction timing was started; and the first stage polymerization reaction was carried out to prepare a material stream containing a polypropylene component I;

(2) after the reaction lasted for 60 minutes, a mixed solution of 25.5 ml (a concentration was $4.9 \times 10^{-6}$ mol/ml) of titanocene hydrogenation catalyst and 15 ml of 0.50 M external electron donor D-donor was added from the catalyst feed pipe (in the mixed solution, a molar ratio of alkyl aluminum contained in the hydrogenation catalyst to the external electron donor was 0.1:1), the temperature was kept at 70°C to start timing the reaction, and it was simulated that the material stream containing polypropylene component I continued to react in the outlet pipeline outside the reactor or in the second and subsequent reactors connected in series with the polymerization reactor in step (1) for 5 minutes (that was, simulating the situation that the material stream containing the polypropylene component I was remained in the pipeline outside the polymerization reactor in step (1) or in the second and subsequent polymerization reactors connected in series with the polymerization reactor in step (1) for 5 minutes);

unreacted materials were vented, the reaction was cooled and stopped to obtain a propylene polymer product containing ultra-high molecular weight polypropylene (UHMWPP) components; and

(3) after the propylene polymer product was taken out, the product was dried in vacuum at 30°C for 2 hours, and then the dried polypropylene product was characterized. The test results are shown in Table 1.

Example 5

The production method for propylene polymer referred to Example 4, but the difference was that in the mixed solution of the hydrogenation catalyst and the external electron donor in step (2), the molar ratio of alkyl aluminum contained in the hydrogenation catalyst to the external electron donor was changed to 10:1, that was, the mixed solution of 25.5 ml of titanocene hydrogenation catalyst and 0.15 ml of 0.50 M external electron donor D-donor was used to continue the reaction for 5 minutes; after that, the unreacted materials were vented, the reaction was cooled and stopped.
The dried polypropylene product was characterized. The test results are shown in Table 2.

Example 6

The production method for propylene polymer referred to Example 4, but the difference was that in the mixed solution of the hydrogenation catalyst and the external electron donor in step (2), the molar ratio of alkyl aluminum contained in the hydrogenation catalyst to the external electron donor was changed to 50:1, that was, the mixed solution of 25.5 ml of titanocene hydrogenation catalyst and 0.03 ml of 0.50 M external electron donor D-donor was used.
The dried polypropylene product was characterized. The test results are shown in Table 2.

Comparative Example 4:

The production method for propylene polymer referred to Example 1, but the difference was that only the hydrogenation catalyst was added in step (2) and no external electron donor was added, that was, only 25.5 ml of titanocene hydrogenation catalyst solution was added, and the temperature was kept at 70°C to start timing the reaction. It was simulated that the material stream containing the polypropylene component I continued to react in the outlet pipeline outside the reactor or in the second and subsequent reactors connected in series with the polymerization reactor in step (1) for 5 minutes.
The dried polypropylene product was characterized. The test results are shown in Table 1.

Table 1

| | Comparative Example 1 | Comparative Example 2 | Comparative Example 3 | Comparative Example 4 | Comparative Example 1 | Comparative Example 2 | Comparative Example 3 |
|---|---|---|---|---|---|---|---|
| Raw materials and reaction conditions of polymerization reaction | | | | | | | |
| Catalyst | Catalyst A | Catalyst A | Catalyst A | Catalyst A | Catalyst A | Catalyst A | Catalyst A |
| External electron donor | D-donor | D-donor | D-donor | D-donor | D-donor | D-donor | D-donor |
| Amount of catalyst added (mg) | 8.1 | 8.1 | 8.1 | 8.1 | 8.1 | 8.1 | 8.1 |
| Al/Ti (mol/mol) | 200 | 200 | 200 | 200 | 200 | 200 | 200 |
| Al/Si (mol/mol) | 5 | 5 | 5 | 5 | 5 | 5 | 5 |
| Amount of hydrogen added in the first stage (mol) | 0.125 | 0.125 | 0 | 0.125 | 0.125 | 0.125 | 0.125 |
| Polymerization time in the first stage (min) | 65 | 90 | 60 | 60 | 60 | 60 | 60 |
| Amount of hydrogenation catalyst added in the second stage ($*10^{-5}$mol) | / | / | / | 12.5 | 12.5 | 12.5 | 1.25 |

(continued)

| | Comparative Example 1 | Comparative Example 2 | Comparative Example 3 | Comparative Example 4 | Comparative Example 1 | Comparative Example 2 | Comparative Example 3 |
|---|---|---|---|---|---|---|---|
| Raw materials and reaction conditions of polymerization reaction | | | | | | | |
| Catalyst | Catalyst A | Catalyst A | Catalyst A | Catalyst A | Catalyst A | Catalyst A | Catalyst A |
| Hydrogenation catalyst/total hydrogen (mol/mol) | / | / | / | 0.001 | 0.001 | 0.001 | 0.0001 |
| Molar ratio of alkyl aluminum to titanocene in hydrogenation catalyst (mol/mol) | / | / | / | 6 | 6 | 6 | 6 |
| External electron donor added in the second stage | / | / | / | / | D-donor | D-donor | D-donor |
| Molar ratio of alkyl aluminum in hydrogenation catalyst to external electron donor (mol/mol) | / | / | / | / | 1 | 1 | 1 |
| Polymerization time in the second stage (min) | / | / | / | 5 | 5 | 30 | 5 |
| Catalyst activity (g PP/g cat·h) | 25898 | 26672 | 19857 | 30389 | 32447 | 33188 | 31597 |
| Test and characterization results of polymer physical properties | | | | | | | |
| Melt mass flow rate MFR (2.16 kg, g/10min) | 2.44 | 2.22 | 0.88 | 2.25 | 2.01 | 1.34 | 2.14 |
| Xylene soluble content XS (wt%) | 1.47 | 1.61 | 1.93 | 1.36 | 1.28 | 1.32 | 1.31 |
| Mn ($*10^4$) | 7.10 | 7.00 | 30.80 | 7.50 | 7.74 | 7.80 | 7.63 |
| Mw ($*10^4$) | 39.50 | 36.80 | 184.40 | 42.50 | 44.82 | 46.55 | 42.83 |
| Mw/Mn | 5.56 | 5.26 | 6.00 | 5.67 | 5.72 | 5.97 | 5.61 |
| Mz ($*10^4$) | 134.1 | 135.7 | 453.4 | 154.4 | 158.5 | 164.9 | 156.2 |
| Proportion (%) of components with molecular weight greater than or equal to 10,000,000 A(logMW$\geq$7)/A(Total)% | 0.01 | 0.021 | 1.360 | 0.037 | 0.052 | 0.066 | 0.045 |

(continued)

| | Comparative Example 1 | Comparative Example 2 | Comparative Example 3 | Comparative Example 4 | Comparative Example 1 | Comparative Example 2 | Comparative Example 3 |
|---|---|---|---|---|---|---|---|
| Raw materials and reaction conditions of polymerization reaction | | | | | | | |
| Catalyst | Catalyst A | Catalyst A | Catalyst A | Catalyst A | Catalyst A | Catalyst A | Catalyst A |
| Mn of components with molecular weight greater than or equal to 10,000,000 (logMW≥7) (*$10^4$) | 1159.54 | 1258.49 | 1218.74 | 1303.58 | 1387.55 | 1594.74 | 1391.36 |
| Mp | 23.50 | 21.77 | 146.12 | 26.15 | 27.35 | 29.60 | 27.22 |
| Mn(logMW≥7)/Mp | 49.3 | 57.8 | 8.3 | 49.9 | 50.7 | 53.9 | 51.1 |
| Test results of mechanical properties of resin | | | | | | | |
| Melt strength (cN) | 1.6 | 1.5 | - | 2.4 | 4.3 | 5.5 | 4.3 |
| Tensile strength (MPa) | 38.9 | 38.7 | - | 39.5 | 42.8 | 43.4 | 41.9 |
| Bending strength (MPa) | 34.6 | 34.8 | - | 35.3 | 36.5 | 38.8 | 37.3 |
| Impact strength (KJ/$m^2$) | 7.91 | 7.85 | - | 8.19 | 9.33 | 15.43 | 8.79 |

It can be seen from the data in Table 1, compared with the situation without using the mixture of the hydrogenation catalyst and the external electron donor in Comparative Examples 1 to 3, in Comparative Example 4, the mechanical properties of the product were improved by using the hydrogenation catalyst alone without adding the external electron donor, and the melt strength could be increased to 2.4 cN. After the mixture of the hydrogenation catalyst and the external electron donor was used in Examples 1 to 3, the polymerization activity was improved, the xylene soluble content in the product was reduced (reflecting the increase of isotacticity of the ultra-high molecular weight components), the mechanical properties were further improved, and the melt strength was increased to 4.3-5.5 cN.

Table 2

| | Comparative Example 4 | Example 4 | Example 1 | Example 5 | Example 6 |
|---|---|---|---|---|---|
| Raw materials and reaction conditions of polymerization reaction | | | | | |
| Catalyst | Catalyst A | Catalyst A | Catalyst A | Catalyst A | Catalyst A |
| External electron donor | D-donor | D-donor | D-donor | D-donor | D-donor |
| Amount of catalyst added (mg) | 8.1 | 8.1 | 8.1 | 8.1 | 8.1 |
| Al/Ti (mol/mol) | 200 | 200 | 200 | 200 | 200 |
| Al/Si (mol/mol) | 5 | 5 | 5 | 5 | 5 |
| Amount of hydrogen added in the first stage (mol) | 0.125 | 0.125 | 0.125 | 0.125 | 0.125 |

(continued)

|  | Comparative Example 4 | Example 4 | Example 1 | Example 5 | Example 6 |
|---|---|---|---|---|---|
| Raw materials and reaction conditions of polymerization reaction | | | | | |
| Catalyst | Catalyst A | Catalyst A | Catalyst A | Catalyst A | Catalyst A |
| Polymerization time in the first stage (min) | 60 | 60 | 60 | 60 | 60 |
| Amount of hydrogenation catalyst added in the second stage (* $10^{-5}$mol) | 12.5 | 12.5 | 12.5 | 12.5 | 12.5 |
| Hydrogenation catalyst/total hydrogen (mol/-mol) | 0.001 | 0.001 | 0.001 | 0.001 | 0.001 |
| Molar ratio of alkyl aluminum to titanocene in hydrogenation catalyst (mol/mol) | 6 | 6 | 6 | 6 | 6 |
| External electron donor added in the second stage | / | D-donor | D-donor | D-donor | D-donor |
| Molar ratio of alkyl aluminum in hydrogenation catalyst to external electron donor (mol/mol) | / | 0.1 | 1 | 10 | 50 |
| Polymerization time in the second stage (min) | 5 | 5 | 5 | 5 | 5 |
| Catalyst activity (g PP/g cat·h) | 30389 | 30445 | 32447 | 32000 | 32237 |
| Test and characterization results of polymer physical properties | | | | | |
| Melt mass flow rate MFR (2.16 kg, g/10min) | 2.25 | 1.41 | 2.01 | 1.90 | 2.00 |
| Xylene soluble content XS (wt%) | 1.36 | 1.27 | 1.28 | 1.29 | 1.34 |
| Mn ($*10^4$) | 7.5 | 7.6 | 7.74 | 7.43 | 7.23 |
| Mw ($*10^4$) | 42.5 | 48.4 | 44.82 | 44.56 | 43.6 |
| Mw/Mn | 5.67 | 6.37 | 5.72 | 5.99 | 6.03 |
| Mz ($*10^4$) | 154.4 | 182.2 | 158.5 | 160.8 | 159.3 |
| Proportion (%) of components with molecular weight greater than or equal to 10,000,000 A(logMW$\geq$7)/A(Total)%) | 0.037 | 0.068 | 0.052 | 0.058 | 0.054 |
| Mn of components with molecular weight greater than or equal to 10,000,000 (logMW$\geq$7) ($*10^4$) | 1303.58 | 1530.77 | 1387.55 | 1401.34 | 1398.27 |
| Mp | 26.15 | 28.96 | 27.35 | 27.66 | 27.50 |
| Mn(logMW$\geq$7)/Mp | 49.9 | 52.9 | 50.7 | 50.7 | 50.8 |
| Test results of mechanical properties of resin | | | | | |
| Melt strength (cN) | 2.4 | 4.5 | 4.3 | 4.5 | 4.5 |
| Tensile strength (MPa) | 39.5 | 43.4 | 42.8 | 43.1 | 43 |
| Bending strength (MPa) | 35.3 | 38.7 | 36.5 | 36.8 | 36.7 |
| Impact strength (KJ/m$^2$) | 8.19 | 15.25 | 9.33 | 10.03 | 9.78 |

It can be seen from the data in Table 2, the smaller the molar ratio of alkyl aluminum in the hydrogenation catalyst to the external electron donor, that was, the larger the amount of the external electron donor was, the lower the xylene soluble content of the product was. Compared with Comparative Example 4, wherein only the hydrogenation catalyst was used and the external electron donor was not used, the performance of the product was obviously improved in the range of molar ratio of alkyl aluminum contained in the hydrogenation catalyst to the external electron donor of 0.1 to 50.

Example 7:

Polymerization of propylene and ethylene was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and 0.20 mol of hydrogen were sequentially added at a room temperature, and the obtained system was heated to 60°C;
before the temperature of the reactor reached 60°C, ethylene was injected into the reactor at a flow rate of 20 g/h, at the same time, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 60°C, the mixture was injected into the reactor through a catalyst feed pipe and the reaction timing was started; and the first stage polymerization reaction was carried out to prepare a material stream containing a polypropylene component I;
(2) after the reaction lasted for 60 minutes, a mixed solution of 4.0 ml (a concentration was $4.9 \times 10^{-6}$ mol/ml) of titanocene hydrogenation catalyst and 0.24 ml of 0.50 M external electron donor D-donor was added from the catalyst feed pipe (in the mixed solution, a molar ratio of alkyl aluminum contained in the hydrogenation catalyst to the external electron donor was 1: 1; and the molar ratio of alkyl aluminum to titanocene in the hydrogenation catalyst was 6), the temperature was kept at 60°C to start timing the reaction, and it was simulated that the material stream containing polypropylene component I continued to react in the outlet pipeline outside the reactor or in the second and subsequent reactors connected in series with the polymerization reactor in step (1) for 10 minutes (that was, simulating the situation that the material stream containing the polypropylene component I was remained in the pipeline outside the polymerization reactor in step (1) or in the second and subsequent polymerization reactors connected in series with the polymerization reactor in step (1) for 10 minutes);
unreacted materials were vented, the reaction was cooled and stopped to obtain a propylene polymer product containing ultra-high molecular weight polypropylene (UHMWPP) components; and
(3) after the propylene polymer product was taken out, the product was dried in vacuum at 30°C for 2 hours, and then the dried polypropylene product was characterized. The test results are shown in Table 3.

Example 8:

A production method for propylene polymer referred to Example 7, but the difference was that the time for continuing the reaction in the presence of the mixed solution of the hydrogenation catalyst and the external electron donor D-donor in step (2) was changed to 30 minutes.
The dried polypropylene product was characterized. The test results are shown in Table 3.

Example 9:

A production method for propylene polymer referred to Example 7, but the difference was that the time for continuing the reaction in the presence of the mixed solution of the hydrogenation catalyst and the external electron donor D-donor in step (2) was changed to 60 minutes.
The dried polypropylene product was characterized. The test results are shown in Table 3.

Comparative Example 5:

Polymerization of propylene and ethylene was carried out in a 5L stainless steel polymerizer:
(1) firstly, a reactor was purged with refined nitrogen (the content of water was less than 1 ppm, the content of oxygen was less than 1 ppm); then, 2.2 L of liquid propylene and 0.20 mol of hydrogen were sequentially added at a room temperature, and the obtained system was heated to 60°C;
before the temperature of the reactor reached 60°C, ethylene was injected into the reactor at a flow rate of 20 g/h, at the same time, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 60°C, the mixture was injected into the reactor through a catalyst feed pipe and the reaction timing was started;
(2) after the reaction lasted for 60 minutes, unreacted materials were vented, the reaction was cooled and stopped; and
(3) after the propylene polymer product was taken out, the product was dried in vacuum at 30°C for 2 hours, and then the dried polypropylene product was characterized. The test results are shown in Table 3.

Table 3

| | Comparative Example 5 | Example 7 | Example 8 | Example 9 |
|---|---|---|---|---|
| Raw materials and reaction conditions of polymerization reaction | | | | |
| Catalyst | Catalyst A | Catalyst A | Catalyst A | Catalyst A |
| External electron donor | D-donor | D-donor | D-donor | D-donor |
| Amount of catalyst added (mg) | 8.1 | 8.1 | 8.1 | 8.1 |
| Al/Ti (mol/mol) | 200 | 200 | 200 | 200 |
| Al/Si (mol/mol) | 5 | 5 | 5 | 5 |
| Amount of hydrogen added in the first stage (mol) | 0.20 | 0.20 | 0.20 | 0.20 |
| Amount of ethylene added in the first stage (g/h) | 20 | 20 | 20 | 20 |
| Polymerization time in the first stage (min) | 60 | 60 | 60 | 60 |
| Amount of hydrogenation catalyst added in the second stage ($*10^{-5}$mol) | / | 1.96 | 1.96 | 1.96 |
| Hydrogenation catalyst/total hydrogen (mol/mol) | / | 0.0001 | 0.0001 | 0.0001 |
| Molar ratio of alkyl aluminum to titanocene in hydrogenation catalyst | / | 6 | 6 | 6 |
| External electron donor added in the second stage | / | D-donor | D-donor | D-donor |
| Molar ratio of alkyl aluminum in hydrogenation catalyst to external electron donor (mol/mol) | / | 1 | 1 | 1 |
| Amount of ethylene added in the second stage (g/h) | / | 20 | 20 | 20 |
| Polymerization time in the second stage (min) | / | 10 | 30 | 60 |
| Catalyst activity (g PP/g cat·h) | 33517 | 32545 | 32884 | 29119 |
| Test and characterization results of polymer physical properties | | | | |
| Melt mass flow rate MFR (2.16 kg, g/10min) | 4.16 | 1.53 | 1.09 | 0.04 |
| Mn ($*10^4$) | 8.00 | 8.95 | 8.99 | 10.21 |
| Mw ($*10^4$) | 40.00 | 51.84 | 78.90 | 140.56 |
| Mw/Mn | 5 | 5.8 | 8.8 | 13.76 |
| Mz ($*10^4$) | 136.6 | 228.6 | 365.5 | 566.0 |
| Proportion (%) of components with molecular weight greater than or equal to 10,000,000 A(logMW$\geq$7)/A(Total)% | 0.02 | 0.09 | 0.57 | 1.82 |
| Mn of components with molecular weight greater than or equal to 10,000,000 (logMW$\geq$7) ($*10^4$) | 1099.14 | 1484.66 | 1556.21 | 1588.56 |
| Mp ($*10^4$) | 23.70 | 30.16 | 35.77 | 38.21 |
| Mn(logMW$\geq$7)/Mp | 46.38 | 49.23 | 43.51 | 41.57 |

It can be seen from the data in Table 3, when propylene-ethylene random copolymerization was carried out, the mixture of the hydrogenation catalyst and the external electron donor was used in Examples 7 to 9, the melt index of the products was lower and the molecular weight was higher than those in Comparative Example 5. With the extension of polymerization time in the second polymerization stage, the content of the ultra-high molecular weight polypropylene components increased.

Example 10:

Polymerization was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and 0.125 mol of hydrogen were sequentially added at a room temperature, and heated to 70°C;

before the temperature of the reactor reached 70°C, 2.0 ml of 0.50 M triethylaluminum heptane solution prepared in advance, 0.4 ml of 0.50 M D-donor hexane solution and 8.1 mg of catalyst A were mixed for 5 minutes to form a mixture, and when the reactor reached 70°C, the mixture was injected into the reactor through a catalyst feed pipe and the reaction timing was started; the first stage polymerization reaction was carried out to prepare a material stream containing a polypropylene component I;

(2) after the reaction lasted for 60 minutes, a mixed solution of 2.55 ml (a concentration was $4.9 \times 10^{-6}$ mol/ml) of titanocene hydrogenation catalyst and 0.15 ml of 0.50 M external electron donor D-donor was added from the catalyst feed pipe (in the mixed solution, a molar ratio of alkyl aluminum to titanocene in the hydrogenation catalyst was 8; the molar ratio of alkyl aluminum to the external electron donor was 1: 1; and the molar ratio of the hydrogenation catalyst to total hydrogen was 1:10000), the temperature was kept at 70°C to start timing the reaction, and it was simulated that the material stream containing polypropylene component I continued to react in the outlet pipeline outside the reactor or in the second and subsequent reactors connected in series with the polymerization reactor in step (1) for 5 minutes (that was, simulating the situation that the material stream containing the polypropylene component I was remained in the pipeline outside the polymerization reactor in step (1) or in the second and subsequent polymerization reactors connected in series with the polymerization reactor in step (1) for 5 minutes);

unreacted materials were vented, the reaction was cooled and stopped to obtain a propylene polymer product containing ultra-high molecular weight polypropylene (UHMWPP) components; and

(3) after the propylene polymer product was taken out, the product was dried in vacuum at 30°C for 2 hours, and then the dried polypropylene product was characterized. The test results are shown in Table 4.

Example 11:

A production method for propylene polymer referred to Example 10, but the difference was that in step (2), the molar ratio of alkyl aluminum to titanocene in the hydrogenation catalyst was 10.

The dried polypropylene product was characterized. The test results are shown in Table 4.

Example 12:

A production method for propylene polymer referred to Example 1, but the difference was that in step (2), the amount of the hydrogenation catalyst was adjusted to 5.1 ml, and the amount of the external electron donor was adjusted to 0.3 ml (that was, the molar ratio of the hydrogenation catalyst to total hydrogen was 1:5000).

The dried polypropylene product was characterized. The test results are shown in Table 4.

Comparative Example 6:

A production method for propylene polymer referred to Example 10, but the difference was that the molar ratio of alkyl aluminum to titanocene in the hydrogenation catalyst was 1.5.

The dried polypropylene product was characterized. The test results are shown in Table 4.

Comparative Example 7:

A production method for propylene polymer referred to Example 10, but the difference was that the molar ratio of alkyl aluminum to titanocene in the hydrogenation catalyst was 4.

The dried polypropylene product was characterized. The test results are shown in Table 4.

Table 4

| | Example 10 | Example 11 | Example 12 | Comparative Example 6 | Comparative Example 7 |
|---|---|---|---|---|---|
| Raw materials and reaction conditions of polymerization reaction | | | | | |
| Catalyst | Catalyst A | Catalyst A | Catalyst A | Catalyst A | Catalyst A |
| External electron donor | D-donor | D-donor | D-donor | D-donor | D-donor |
| Amount of catalyst added (mg) | 8.1 | 8.1 | 8.1 | 8.1 | 8.1 |
| Al/Ti (mol/mol) | 200 | 200 | 200 | 200 | 200 |
| Al/Si (mol/mol) | 5 | 5 | 5 | 5 | 5 |
| Amount of hydrogen added in the first stage (mol) | 0.125 | 0.125 | 0.125 | 0.125 | 0.125 |
| Polymerization time in the first stage (min) | 60 | 60 | 60 | 65 | 90 |
| Amount of hydrogenation catalyst added in the second stage ($*10^{-5}$mol) | 1.25 | 1.25 | 2.5 | / | 1.25 |
| Molar ratio of alkyl aluminum to titanocene in hydrogenation catalyst | 8 | 10 | 6 | 1.5 (precipita tion) | 4 (insufficie nt dissolutio n) |
| External electron donor added in the second stage | D-donor | D-donor | D-donor | / | D-donor |
| Molar ratio of alkyl aluminum in hydrogenation catalyst to external electron donor (mol/mol) | 1 | 1 | 1 | / | 1 |
| Hydrogenation catalyst/total hydrogen (mol/mol) | 1/10000 | 1/10000 | 1/5000 | / | 1/10000 |
| Polymerization time in the second stage (min) | 5 | 5 | 5 | / | 5 |
| Catalyst activity (g PP/g cat·h) | 31280 | 32498 | 27774 | / | 25672 |
| Test and characterization results of polymer resin physical properties | | | | | |
| Melt mass flow rate MFR (2.16kg, g/10min) | 2.35 | 2.60 | 1.63 | / | 2.46 |
| Xylene soluble content XS (wt%) | 1.50 | 1.71 | 1.32 | / | 2.01 |
| Mn ($*10^4$) | 7.00 | 7.11 | 8.20 | / | 6.91 |
| Mw ($*10^4$) | 39.44 | 40.32 | 60.69 | / | 34.55 |
| Mw/Mn | 5.63 | 5.67 | 7.40 | / | 5.00 |
| Mp ($*10^4$) | 25.21 | 24.98 | 37.66 | / | 21.00 |
| Mz ($*10^4$) | 151.1 | 149.9 | 168.2 | / | 146.3 |
| Proportion (%) of components with molecular weight greater than or equal to 10,000,000 (A($\log MW \geq 7$)/A(Total)%) | 0.053 | 0.051 | 0.057 | / | 0.029 |
| Mn of components with molecular weight greater than or equal to 10,000,000 ($\log MW \geq 7$) ($*10^4$) | 1354.86 | 1325.33 | 1395.84 | / | 1178.84 |
| Mn($\log MW \geq 7$)/Mp | 53.7 | 53.1 | 37.1 | / | 56.1 |

It can be seen from the data in Table 4 that when the molar ratio of alkyl aluminum to titanocene in the hydrogenation catalyst was less than or equal to 4, the alkyl aluminum could not completely dissolve titanocene, and titanocene could not effectively perform hydrogenation at the moment; when the molar ratio of alkyl aluminum to titanocene was 1.5, there was obvious precipitation and the catalyst could not be used in polymerization. When the molar ratio of alkyl aluminum to titanocene in the hydrogenation catalyst was 8 or 10, the alkyl aluminum was slightly excessive and the melt index of the product was only slightly increased, which could be used as a hydrogenation catalyst. When the molar ratio of the hydrogenation catalyst to total hydrogen (mol/mol) was 1/5000, the hydrogenation effect was better than that of 1/10000, and the melt index of the obtained polymer product was lower.

Example 13:

Polymerization was carried out in a 5L stainless steel polymerizer:

(1) firstly, a reactor was purged with refined nitrogen (the content of water was less than 1 ppm, the content of oxygen was less than 1 ppm); then, 2.2 L of liquid propylene and 0.048 mol of hydrogen were sequentially added at a room temperature, and the obtained system was heated to 70°C;
before the temperature of the reactor reached 70°C, 2.0 ml of 0.50 M triethylaluminum heptane solution prepared in advance, 0.4 ml of 0.50 M TEOS hexane solution and 8.1 mg of catalyst B were mixed for 5 minutes to form a mixture, and when the reactor reached 70°C, the mixture was injected into the reactor through a catalyst feed pipe and the reaction timing was started; the first stage polymerization reaction was carried out to prepare a material stream containing a polypropylene component I;
(2) after the reaction lasted for 60 minutes, a mixed solution of 2.55 ml (a concentration was $4.9\times10^{-6}$ mol/ml) of titanocene hydrogenation catalyst and 0.15 ml of 0.50 M external electron donor D-donor was added from the catalyst feed pipe (in the mixed solution, the molar ratio of alkyl aluminum to titanocene in the hydrogenation catalyst was 6; and the molar ratio of alkyl aluminum to the external electron donor was 1: 1), the temperature was kept at 70°C to start timing the reaction, and it was simulated that the material stream containing polypropylene component I continued to react in the outlet pipeline outside the reactor or in the second and subsequent reactors connected in series with the polymerization reactor in step (1) for 60 minutes (that was, simulating the situation that the material stream containing the polypropylene component I was remained in the pipeline outside the polymerization reactor in step (1) or in the second and subsequent polymerization reactors connected in series with the polymerization reactor in step (1) for 60 minutes);
unreacted materials were vented, the reaction was cooled and stopped to obtain a propylene polymer product containing ultra-high molecular weight polypropylene (UHMWPP) components; and
(3) after the propylene polymer product was taken out, the product was dried in vacuum at 30°C for 2 hours, and then the dried polypropylene product was characterized. The test results are shown in Table 5.

Comparative Example 8:

A production method for propylene polymer referred to Example 13, but the difference was that only hydrogenation catalyst was added in step (2) and no external electron donor was added.
The dried polypropylene product was characterized. The test results are shown in Table 5.

Table 5

|  | Comparative Example 8 | Example 13 |
|---|---|---|
| Raw materials and reaction conditions of polymerization reaction |  |  |
| Catalyst | Catalyst B | Catalyst B |
| External electron donor in the first stage | TEOS | TEOS |
| Amount of catalyst added (mg) | 8.1 | 8.1 |
| Al/Ti (mol/mol) | 200 | 200 |
| Al/Si (mol/mol) | 5 | 5 |
| Amount of hydrogen added in the first stage (mol) | 0.048 | 0.048 |
| Polymerization time in the first stage (min) | 60 | 60 |
| Amount of hydrogenation catalyst added in the second stage ($*10^{-6}$mol) | 12.5 | 12.5 |
| External electron donor in the second stage | / | D-donor |
| Molar ratio of alkyl aluminum to titanocene in hydrogenation catalyst (mol/mol) | 6 | 6 |

EP 4 782 469 A1

(continued)

|  | Comparative Example 8 | Example 13 |
|---|---|---|
| Raw materials and reaction conditions of polymerization reaction | | |
| Molar ratio of alkyl aluminum in hydrogenation catalyst to external electron donor (mol/mol) | / | 1 |
| Hydrogenation catalyst/total hydrogen (mol/mol) | 2.6/10000 | 2.6/10000 |
| Polymerization time in the second stage (min) | 60 | 60 |
| Catalyst activity (g PP/g cat·h) | 27200 | 30500 |
| Test and characterization results of polymer physical properties | | |
| Melt mass flow rate MFR (2.16kg, g/10min) | 6.66 | 6.27 |
| Xylene soluble content XS (wt%) | 5.38 | 5.02 |
| Mn (*$10^4$) | 4.67 | 4.70 |
| Mw (*$10^4$) | 25.95 | 26.99 |
| Mw/Mn | 5.56 | 5.74 |
| Mp (*$10^4$) | 9.68 | 9.97 |
| Mz (*$10^4$) | 141.9 | 145.8 |
| Proportion (%) of components with molecular weight greater than or equal to 10,000,000 A(logMW$\geq$7)/A(Total)% | 0.025 | 0.037 |
| Mn of components with molecular weight greater than or equal to 10,000,000 (logMW$\geq$7) (*$10^4$) | 1210.55 | 1221.78 |
| Mn(logMW$\geq$7)/Mp | 125.0 | 122.5 |

It can be seen from the data in Table 5, compared with Comparative Example 8, in Example 13, when TEOS was used in the first polymerization stage and the mixture of the hydrogenation catalyst and the external electron donor D-donor was used in the second polymerization stage, the xylene soluble content of the product could be significantly reduced (that was, this result reflected the increase of isotacticity of the product), which was reduced from 5.38% to 5.02%, indicating that the isotacticity of the ultra-high molecular weight polypropylene components could adjusted by using the external electron donor when adding the hydrogenation catalyst in the second polymerization stage.

Therefore, the product of the present invention can significantly improve the performance of polypropylene by containing a small amount of ultra-high molecular weight components, and the isotacticity of the ultra-high molecular weight polypropylene components can be adjusted after using the mixture of the hydrogenation catalyst and the external electron donor. The average molecular weight Mn (logMW is greater than to equal to 7) of UHMWPP produced in each example was much higher than the peak molecular weight Mp of the obtained product, and the ratio of Mn (logMW is greater than to equal to 7)/Mp was higher than 10.

The above is only the preferred embodiment of the present invention, and it should be pointed out that for those skilled in the art, several improvements and supplements can be made without departing from the method of the present invention, and these improvements and supplements should also be regarded as the protection scope of the present invention.

**Claims**

1.  A catalyst for an olefin polymerization process, wherein the catalyst is a mixture of a transition metal Group IVB metallocene compound, an alkyl aluminum compound and an external electron donor D1, and the transition metal Group IVB metallocene compound is at least mixed with a part of the alkyl aluminum compound before contacting with the external electron donor D1;

    preferably, the catalyst is a mixture of a hydrogenation catalyst and the external electron donor D1, and the hydrogenation catalyst is a mixture of the transition metal Group IVB metallocene compound and the alkyl aluminum compound;

20

preferably, the external electron donor D1 is an alkoxy-substituted silane compound, preferably a dimethoxysilane compound; and

preferably, a general formula of the transition metal Group IVB metallocene compound is R(R')-M-X(X'), wherein R and R' are each independently cyclopentadienyl, indenyl or fluorenyl without a substituent or with a substituent, wherein the substituent is preferably selected from methyl, ethyl, propyl, butyl and cycloalkyl; R and R' can be bridged by a substituent containing C or Si;

M is a transition metal element, preferably one or more selected from Ti, Zr and Hf;

X and X' are each independently a halogen atom, alkyl or an alkoxy; and

more preferably, the transition metal Group IVB metallocene compound is $Cp_2TiCl_2$.

2. The catalyst according to claim 1, wherein a molar ratio of the alkyl aluminum compound to the external electron donor D1 is 0.1:1-50:1, preferably 0.1:1-30:1; and a molar ratio of aluminum in the alkyl aluminum compound to the transition metal Group IVB metallocene compound is 5.5-100.0:1, preferably 5.5-10.0:1, and more preferably 5.5-8.0:1.

3. A propylene polymer containing an ultra-high molecular weight polypropylene component and having an adjustable isotacticity, wherein a melt mass flow rate MFR of the propylene polymer is greater than or equal to 0.01 g/10min and less than or equal to 10000 g/10min;

the propylene polymer contains an ultra-high molecular weight component, a molecular weight MW of the ultra-high molecular weight component is greater than or equal to 10,000,000; in the propylene polymer, a content of the ultra-high molecular weight component is 0.03-15.0wt%; and

a ratio Mn (MW is greater than or equal to 10,000,000)/Mp of a number average molecular weight Mn of the ultra-high molecular weight component to a peak molecular weight Mp of the propylene polymer is greater than or equal to 80.

4. The propylene polymer according to claim 3, wherein the content of the ultra-high molecular weight component in the propylene polymer is 0.03-5.0wt%; and/or

the ratio Mn (MW is greater than or equal to 10,000,000)/Mp of the number average molecular weight Mn of the ultra-high molecular weight component to the peak molecular weight Mp of the propylene polymer is greater than or equal to 100, preferably Mn (MW is greater than or equal to 10,000,000)/Mp is greater than or equal to 120.

5. The propylene polymer according to claim 3 or 4, wherein the melt mass flow rate MFR of the propylene polymer is greater than or equal to 0.01 g/10min and less than or equal to 300 g/10min, preferably greater than or equal to 0.1 g/10min and less than or equal to 200 g/10min; and/or

the melt strength of the propylene polymer is greater than or equal to 2.0 cN.

6. A production method for the propylene polymer, wherein the production method comprises the following steps:

(1) in a polymerization reactor, in the presence of hydrogen and a polymerization catalyst, reacting propylene or reacting propylene with optional one or more comonomers to perform a first-stage (co-) polymerization reaction for 0.1-10 hours to prepare a material stream containing a polypropylene component I;

(2) after the first-stage (co-) polymerization reaction, in the presence of a mixture $D_H$ of a hydrogenation catalyst and an external electron donor, continuing to polymerize at least part of the material stream containing the polypropylene component I, in a pipeline located outside a polymerization reactor in step (1) or in a second and subsequent reactors connected to the polymerization reactor in step (1) in series for 0.05-3.0 hours, thereby obtaining an ultra-high molecular weight polypropylene (UHMWPP) component;

then stopping the reaction to obtain a propylene polymer product containing the ultra-high molecular weight polypropylene (UHMWPP) component;

wherein a molar ratio of the hydrogenation catalyst to the total amount of hydrogen existing in the reactor is 1/10000 to 1/100, preferably 1/10000 to 1/1000.

7. The production method according to claim 6, wherein in step (1), the polymerization catalyst comprises: (a) an active solid catalyst component, preferably a solid catalyst active component containing titanium; (b) an organoaluminum compound as a cocatalyst component; and, optionally, (3) an external electron donor D2; the polymerization catalyst is preferably a mixture D formed by the active solid catalyst component, the organoaluminum compound and the external electron donor D2;

preferably, a strength of catalytic effect of the mixture $D_H$ is higher than a strength of catalytic effect of the mixture D;

preferably, the external electron donor D1 and the external electron donor D2 are the same or different, and are each independently an alkoxy-substituted silane compound or a mixture of a plurality of alkoxy-substituted silane compounds; and

preferably, the hydrogenation catalyst is a mixture of an organometallic compound and an alkyl aluminum compound, and a general formula of the organometallic compound is R(R')-M-X(X'), wherein:

R and R' are each independently cyclopentadienyl, indenyl or fluorenyl without a substituent or with a substituent, wherein the substituent is preferably selected from methyl, ethyl, propyl, butyl and cycloalkyl; R and R' can be bridged by a substituent containing C or Si;

M is a transition metal element, preferably one or more selected from Ti, Zr and Hf;

X and X' are each independently a halogen atom, alkyl or an alkoxy; and

preferably, in the hydrogenation catalyst, a molar ratio of aluminum in the alkyl aluminum compound to the organometallic compound is 3.0-100.0:1, preferably 5.5-10.0:1, and more preferably 5.5-8.0:1.

8. The production method according to claim 6 or 7, wherein the hydrogenation catalyst is a mixture of $Cp_2TiCl_2$ and the alkyl aluminum compound;

wherein a molar ratio of aluminum in the alkyl aluminum compound to $Cp_2TiCl_2$ is 5.5-100.0:1, preferably 5.5-10.0:1, and more preferably 5.5-8.0:1.

9. The production method according to any one of claims 6 to 8, wherein in the mixture $D_H$ formed by the hydrogenation catalyst and the external electron donor D1, a molar ratio of the alkyl aluminum compound in the hydrogenation catalyst to the external electron donor D1 is 0.1:1-50:1, preferably 0.1:1-30:1.

10. The production method according to any one of claims 6 to 9, wherein a length of the pipeline arranged outside the polymerization reactor in step (1) is 0.1-50 meters; and/or

a polymerization time in step (i) is 0.2-5 hours, preferably 0.3-3 hours; and/or
a polymerization temperature in step (i) is 40-250°C, preferably 50-200°C; and/or
a polymerization time in step (ii) is 0.08-2.0 hours, preferably 0.1-1.5 hours; and/or
a polymerization temperature in step (ii) is 0-250°C, preferably 20-200°C.

## INTERNATIONAL SEARCH REPORT

| International application No. |
| --- |
| **PCT/CN2023/136814** |

**A.    CLASSIFICATION OF SUBJECT MATTER**

C08F110/06(2006.01)i

According to International Patent Classification (IPC) or to both national classification and IPC

**B.    FIELDS SEARCHED**

Minimum documentation searched (classification system followed by classification symbols)

IPC:C08F110

Documentation searched other than minimum documentation to the extent that such documents are included in the fields searched

Electronic data base consulted during the international search (name of data base and, where practicable, search terms used)

CNTXT, DWPI, ENTXT, ENTXTC, VEN, CJFD, CNKI, web of science: 国家能源投资集团, 低碳清洁能源研究院, 边宇飞, 陈林枫, 冯留海, 石梦雪, 于佩潜, 俞越, 郑志刚, 超高分子量聚丙烯, 双向拉伸, 二茂钛, 环戊二烯基, 基铝, 加氢催化剂, 铝氧烷, 氧基硅烷, 茚基, 茚基, 钛, 铪, 锆, alkylaluminum, alumoxane, cyclopentadienyl, fluorenyl, hafnium, indenyl, +oxysilane, titanium, Ti, Hf, Zr, UHMWPP, zirconium, Hydrogenation Catalyst, MW

**C.    DOCUMENTS CONSIDERED TO BE RELEVANT**

| Category* | Citation of document, with indication, where appropriate, of the relevant passages | Relevant to claim No. |
| --- | --- | --- |
| X | CN 101642718 A (SUMITOMO CHEMICAL CO., LTD.) 10 February 2010 (2010-02-10) description, paragraphs 10-12, 14, and 48 | 1-2 |
| A | CN 101642718 A (SUMITOMO CHEMICAL CO., LTD.) 10 February 2010 (2010-02-10) description, paragraphs 10-12, 14, and 48 | 3-10 |
| A | CN 101058654 A (CHINA PETROLEUM & CHEMICAL CORP. et al.) 24 October 2007 (2007-10-24) description, page 3, 2nd-to-last paragraph | 1-10 |
| A | CN 106947014 A (BEIJING UNIVERSITY OF CHEMICAL TECHNOLOGY) 14 July 2017 (2017-07-14) entire document | 1-10 |
| A | CN 102174225 A (INSTITUTE OF CHEMISTRY, CHINESE ACADEMY OF SCIENCES) 07 September 2011 (2011-09-07) entire document | 1-10 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 June 2024** | **04 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/136814**

### C. DOCUMENTS CONSIDERED TO BE RELEVANT

| Category* | Citation of document, with indication, where appropriate, of the relevant passages | Relevant to claim No. |
|---|---|---|
| A | EP 0231878 A2 (MITSUBISHI PETROCHEMICAL CO., LTD.) 12 August 1987 (1987-08-12)<br>entire document | 1-10 |
| A | EP 2535372 A1 (BOREALIS AG) 19 December 2012 (2012-12-19)<br>entire document | 1-10 |
| A | JP H02229805 A (MITSUI PETROCHEMICAL INDUSTRIES, LTD.) 12 September 1990 (1990-09-12)<br>entire document | 1-10 |
| A | WO 2022228260 A1 (CHINA PETROLEUM & CHEMICAL CORP. et al.) 03 November 2022 (2022-11-03)<br>entire document | 1-10 |

Form PCT/ISA/210 (second sheet) (July 2022)

## INTERNATIONAL SEARCH REPORT
### Information on patent family members

| International application No. |
| --- |
| **PCT/CN2023/136814** |

| Patent document cited in search report | | | Publication date (day/month/year) | Patent family member(s) | | | Publication date (day/month/year) |
| --- | --- | --- | --- | --- | --- | --- | --- |
| CN | 101642718 | A | 10 February 2010 | DE | 102009036390 | A1 | 15 April 2010 |
| | | | | DE | 102009036390 | B4 | 18 November 2021 |
| | | | | US | 2010036068 | A1 | 11 February 2010 |
| | | | | JP | 2010059415 | A | 18 March 2010 |
| | | | | JP | 5521431 | B2 | 11 June 2014 |
| | | | | US | 2016115254 | A1 | 28 April 2016 |
| | | | | US | 10428162 | B2 | 01 October 2019 |
| CN | 101058654 | A | 24 October 2007 | EP | 2009032 | A2 | 31 December 2008 |
| | | | | EP | 2009032 | A4 | 09 May 2012 |
| | | | | EP | 2009032 | B1 | 12 July 2017 |
| | | | | WO | 2007124680 | A2 | 08 November 2007 |
| | | | | WO | 2007124680 | A3 | 20 March 2008 |
| | | | | US | 2015246986 | A1 | 03 September 2015 |
| | | | | US | 10544242 | B2 | 28 January 2020 |
| | | | | MY | 154967 | A | 28 August 2015 |
| | | | | US | 2009326171 | A1 | 31 December 2009 |
| | | | | KR | 20080111148 | A | 22 December 2008 |
| | | | | KR | 101355861 | B1 | 27 January 2014 |
| | | | | SG | 178718 | A1 | 29 March 2012 |
| CN | 106947014 | A | 14 July 2017 | None | | | |
| CN | 102174225 | A | 07 September 2011 | None | | | |
| EP | 0231878 | A2 | 12 August 1987 | BR | 8700468 | A | 08 December 1987 |
| | | | | US | 5177162 | A | 05 January 1993 |
| | | | | DE | 3787536 | D1 | 04 November 1993 |
| | | | | DE | 3787536 | T2 | 05 May 1994 |
| | | | | JPS | 62187707 | A | 17 August 1987 |
| | | | | JPH | 0735410 | B2 | 19 April 1995 |
| | | | | AU | 6814587 | A | 06 August 1987 |
| | | | | AU | 594421 | B2 | 08 March 1990 |
| | | | | EP | 0231878 | A3 | 14 December 1988 |
| | | | | EP | 0231878 | B1 | 29 September 1993 |
| | | | | US | 4780443 | A | 25 October 1988 |
| | | | | CA | 1280736 | C | 26 February 1991 |
| EP | 2535372 | A1 | 19 December 2012 | WO | 2012171745 | A1 | 20 December 2012 |
| | | | | KR | 20140021706 | A | 20 February 2014 |
| | | | | KR | 101564178 | B1 | 28 October 2015 |
| | | | | EP | 2535372 | B1 | 14 September 2016 |
| | | | | ES | 2605429 | T3 | 14 March 2017 |
| | | | | US | 2014128549 | A1 | 08 May 2014 |
| | | | | US | 9765209 | B2 | 19 September 2017 |
| JP | H02229805 | A | 12 September 1990 | None | | | |
| WO | 2022228260 | A1 | 03 November 2022 | BR | 112023022186 | A2 | 19 December 2023 |
| | | | | TW | 202309112 | A | 01 March 2023 |
| | | | | JP | 2024514968 | A | 03 April 2024 |
| | | | | CA | 3216518 | A1 | 03 November 2022 |
| | | | | KR | 20230175305 | A | 29 December 2023 |
| | | | | EP | 4332132 | A1 | 06 March 2024 |

Form PCT/ISA/210 (patent family annex) (July 2022)

**EP 4 782 469 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6875826 B1
- CN 102134291 A
- CN 102816269 A
- CN 105623077 A
- US 10934372 B2
- US 10544237 B2
- CN 101054424 A
- GB 104022006 T
- GB 93412008 T
- GB 18432008 T